# EUROPEAN PATENT APPLICATION

(11) **EP 2 093 378 A1**
(43) Date of publication of application: **26.08.2009**
(21) Application number: 08101944.0
(22) Date of filing: 25.02.2008
(51) Int. Cl.: F01D 5/20, F01D 5/14, F01D 5/00, B23P 15/04

(54) **Upgrading method for a blade by retrofitting a winglet, and correspondingly upgraded blade**

(71) Applicant: Alstom Technology Ltd, 5400 Baden (CH)
(72) Inventor: Pereti, Michele, 5400 Baden (CH); Ferber, Jörgen, 79793 Wutöschingen (DE)

(57) **Abstract**

A means of reducing the tip leakage for an existing compressor or turbine blade (10) including internally cooled blades is disclosed. The blade (10) is retrofitted with a tip loss-reducing device in the form of a winglet (12). The winglet (12) can be fixing onto the tip portion by bonding the winglet onto the face or faces of the blade by a key and slot arrangement. Alternatively a winglet can be retrofitted by incorporating it on a replacement blade tip portion (25).

## Description

### FIELD OF THE INVENTION

The invention relates to turbine and compressor blades, more specifically to an apparatus and method for reducing the tip leakage of such blades

### STATE OF THE ART

Compressor and turbine blades are characterised by being subject to extreme operating conditions. These include in the case of compressor blades operating temperatures of typically up to 500 °C and for turbine blades typically above 500 °C for last stage blades and greater than 1000 °C for first stage blades. These high temperatures can necessitate the inclusion of internal cooling. Further, compressor /turbine blades are subject to high centrifugal loads operating typically at minimum speeds of between 3000 - 3600 min⁻¹. The special consideration of material selection, manufacturing technique and design required to enable operation under these environments differentiate these blades from other types of blades.

A known compressor / turbine inefficiency is gas leakage across a blade tip, commonly known as tip leakage, from the pressure side to the suction side of the blade. To overcome this problem tip arrangements have been developed that rely on increasing flow resistance across the blade tip. A common arrangement, referred to as a winglet or mini shroud, comprises ribs or brackets formed at the blade tip. An example can be found in the teachings of US 6,56,324. The problem with the application of the teachings is the acceptance that, due to the exacting engineering requirements as a result of harsh operating environments, blade improvements must be formed during the manufacture of the blades and cannot be retrofitted. Therefore in order to take advantage of the teachings, existing blades must be replaced at significant cost.

While it is known to modify fan blades as taught in US 7,252,478 the teachings are not applicable to compressor or turbine blades due to very different operating environments. Fan blades of the type described in US 7,252,478 typically are subject to temperatures around 50 °C and low revolution speed.

### SUMMARY OF THE INVENTION

The present invention deals with the problem of reducing the tip loss of compressor or turbine blades that are subject to high centrifugal forces and thermal stresses. It achieves this by providing a method and an apparatus that overcomes the apparent deficiencies of known winglet forming methods.

This problem is solved by means of the subject matters of the independent claims. Advantageous embodiments are given in the dependent claims.

The invention is based on the general idea of modifying existing compressor /turbine blades to retrofit tip loss prevention designs in such as way as not to compromise the mechanical integrity or any existing internal cooling arrangements.

It is the object of the present invention to provide an apparatus and a method for reducing the tip losses from a compressor or turbine blade.

Another object of the present invention is to provide an alternative compressor or turbine blade including internally cooled turbine blades with reduced tip loss

Yet another object of the present invention it to provide a means to optimise winglets material selection.

It is a further object of the present invention to overcome, or at least substantially ameliorate, the disadvantages and shortcomings of the prior art.

Other objects and advantages of the present invention will become apparent from the following description, taken in connection with the accompanying drawings, wherein, by way of illustration and example, an embodiment of the present invention is disclosed.

According to a first embodiment of the invention there is provided a method for modifying a turbine or compressor blade comprising a tip portion having: a tip wall, a pressure face, and a suction face. The method includes retrofitting a winglet to the blade such that in use tip leakage is reduced.

In a preferred form the winglet is retrofitted by being fixed to one or each of the tip portions faces.

In another preferred form the winglet is retrofitted by first:
a) removing the tip portion, and then
b) bonding a replacement tip portion in place of the removed tip portion wherein the replacement tip portion comprises the winglet

The winglet in a preferred form is formed as one piece with the replacement tip portion and in another preferred from is fixed to the one or each face.

In a preferred form the winglet is fixed to the tip portion by:
a. machining one or more slots through one or each the faces,
b. manufacture the winglet such that the winglet comprises one or more keys on an inner edge face such that the one or more keys are receivable by one or more the slots therein,
c. engaging the inner edge face of the winglet with the one or each face by inserting the one or more the keys in the one or more slots,
d. bonding the winglet to the one or each faces

According to another preferred embodiment there is provided a turbine or compressor blade comprising a tip portion having a pressure face and a suction face, the blade characterised by a winglet retrofitted to the blade such that in use blade tip leakage is reduced

In a preferred form the winglet is retrofitted by being fixed by fixing means to one or each of the tip portions faces.

In another preferred form the tip portion is a replacement tip portion and the winglet is retrofitted by being fixed by fixing means to one or each of the faces of the replacement tip portion.

In another preferred form the tip portion is a replacement tip portion. The winglet is retrofitted by being formed as one piece with the replacement tip portion.

In yet another preferred form the blade is a turbine blade having internal cooling and the winglet is fixed by fixing means to the one or each face of the tip portion such that the internal cooling of the blade is not disrupted.

In a preferred form the fixing means comprises:
a) one or more slots through one or each of the faces,
b) one or more keys on an inner edge of the winglet wherein the one or more keys are receivable by one or more the slots therein,
c) one or more keys received in the one or more the slots therein enabling engagement of the inner edge with the tip portion face,
d) bonding means bonding the winglet to the one or each face.

### BRIEF DESCRIPTION OF THE DRAWINGS

By way of example, an embodiment of the invention is described more fully hereinafter with reference to the accompanying drawings, in which:-
Figure 1 is a perspective view of a compressor or turbine blade with retrofitted winglet according to a preferred embodiment of the invention;
Figure 2 is a perspective view of the compressor or turbine blade showing slots according to a first preferred embodiment of the invention;
Figure 3 is a sectional view through III-III in Figure 1 showing a winglet fitted to the pressure side of the compressor or turbine blade,
Figure 4 is a sectional view through III-III in Figure 1 showing a winglet fitted to the suction and pressure side of the compressor or turbine blade,
Figure 5 is a perspective view of a compressor or turbine blade according to another preferred embodiment of the invention where the blade has a replacement tip. The replacement tip comprising a winglet on the pressure face,
Figure 6 is a perspective view of a compressor or turbine blade according to another preferred embodiment of the invention where the blade has a replacement tip. The replacement tip comprising a winglet on the suction face

### DETAILED DESCRIPTION OF THE INVENTION

Preferred embodiments of the present invention are now described with reference to the drawings, wherein like reference numerals are used to refer to like elements throughout. In the following description, for purposes of explanation, numerous specific details are set forth in order to provide a thorough understanding of the invention. It may be evident, however, that the invention may be practiced without these specific details. In other instances, well-known structures and devices are shown in block diagram form in order to facilitate describing the invention.

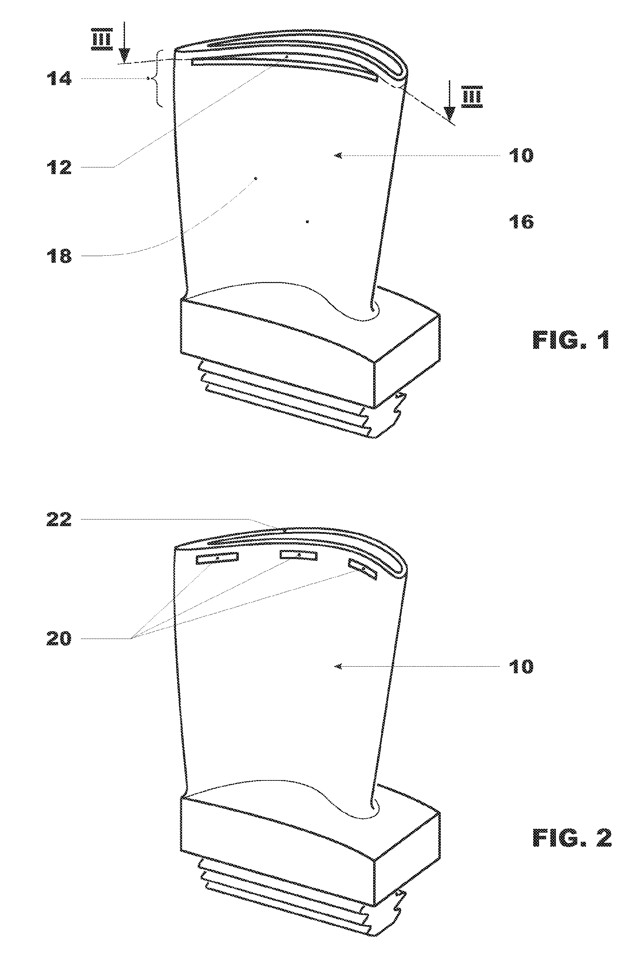

As seen in Figure 1, 5 and 6 disclosed are preferred embodiments of a manufactured compressor or turbine blade 10 that has been subsequently modified by the retrofitting of a winglet 12 on either or both of the pressure 16 or suction faces 18 of a tip portion 14. In a preferred embodiment the blade 10 is also an internally cooled turbine blade.

The winglet 12 is retrofitted to the compressor or turbine blade in such a manner that it is capable of withstanding the extreme operating conditions it will be exposed to during operating. According to one preferred embodiment of the invention the winglet 12 is retrofitted by being fixed to the blade.

The method of fixing includes machining slots 20, Figure 2, through either or both the pressure 16 and suction 18 faces of the tip portion. The slots 22 provide a means of holding the winglet 12 in place. The dimensions and number of slots machined is dependant on winglet design and blade operating conditions. Preferably there is more than one slot as in this arrangement operating stresses are more evenly distributed.

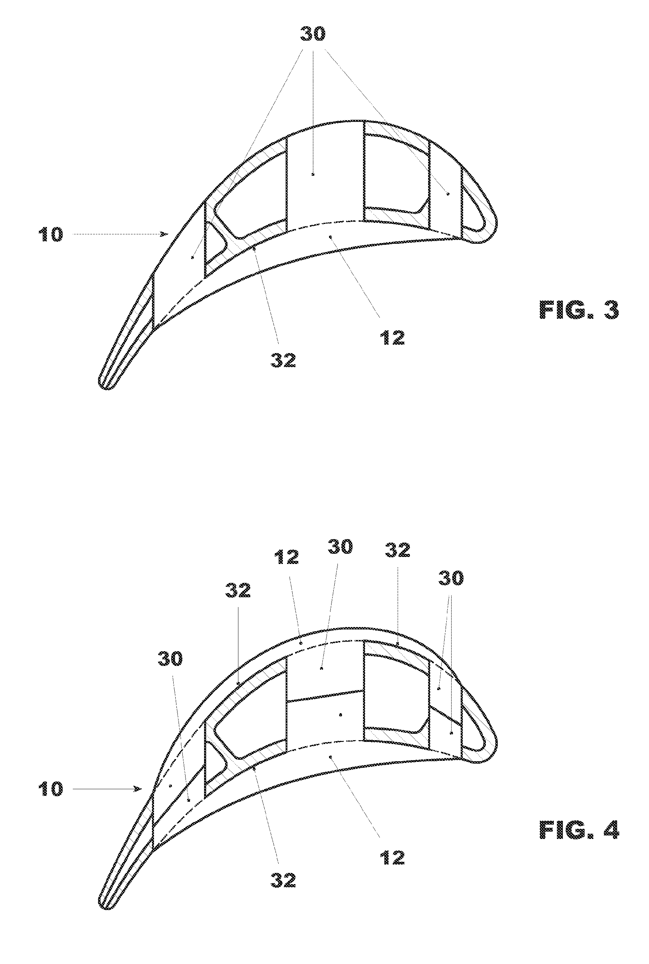

As shown in Figure 3, a winglet 12 is manufactured to include keys 30 on an inner edge 32, wherein the keys 30 are insertable into slots 22 such that after insertion not only is the winglet held in place but also the inner edge 32 of the winglet engages with a face 16,18 of the tip portion. In another preferred arrangement, Figure 4, the winglet engages the pressure 16 and suction faces 18.

Bonding by welding the held winglet to the blade tip after insertion of the keys and engagement of the winglet and tip portion face then completes fixing of the winglet 12. Bonding means is however not limited to welding but can also include brazing and other known means.

The skilled person would also recognize that variations of the fixing method that results in the fixing of a winglet with sufficient integrity to withstand the extreme operating conditions of a compressor or turbine blade could be used without detracting from the intent of the invention.

As the winglet is retrofitted rather than being formed as one piece with the tip, is it possible to use different materials to manufacture the tip portion 14 and winglet 12. This characteristic can be advantageously exploited for example to improve the oxidation, or corrosion resistance of the winglet 12. Operating and design considerations could suggest other useful exploits of this characteristic.

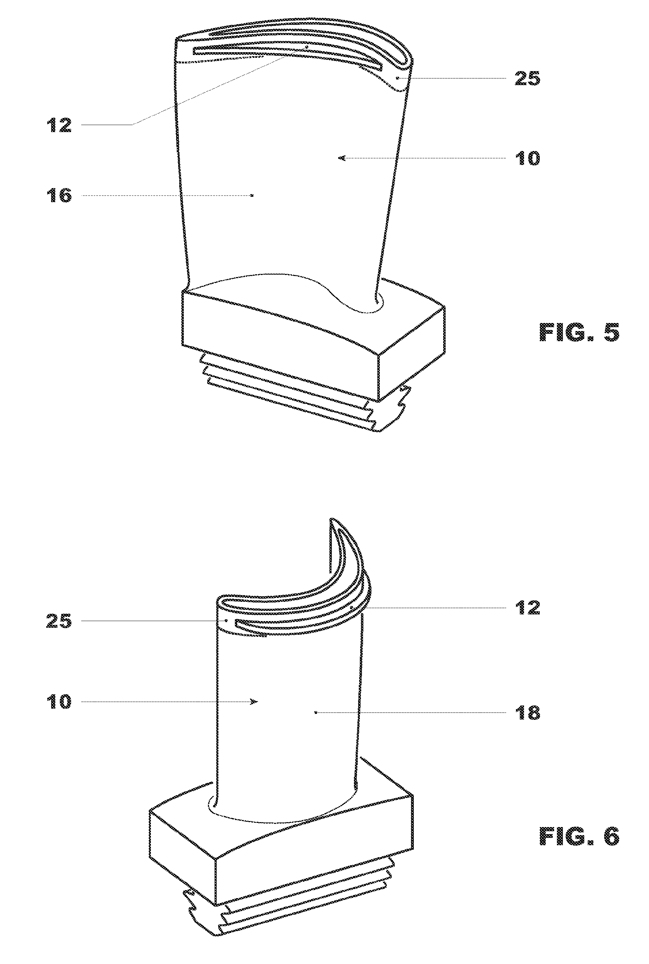

In another preferred embodiment, as shown in Figure 5 and 6, the winglet is retrofitted to the blade by firstly removing the tip portion from a compressor or turbine blade and then fixing or bonding in place a replacement tip portion 25. In another preferred form the winglet is formed as part of the replacement tip during its manufacture

In a further preferred embodiment where the blade is an internally cooled blade the slots are preferable arrangement adjacent to the tip wall 22 so that when the winglet is fixed the keys of the winglet do not disrupt the internal cooling flow of the blade 10.

Although the invention has been herein shown and described in what is conceived to be the most practical and preferred embodiment, it is recognised that departures can be made within the scope of the invention, which is not to be limited to the details described herein but is to be accorded the full scope of the appended claims so as to embrace any and all equivalent devices and apparatus.

### REFERENCE NUMBERS

10. Blade
12. Winglet
14. Blade tip portion
16. Pressure face
18. Suction face
20. Slot
22. Tip wall
25 Replacement tip portion
30 Winglet Keys
32 Winglet inner edge face

## Claims

1. A method for modifying a turbine or compressor blade comprising a tip portion (14) having: a tip wall (22) , a pressure face (16) , and a suction face (18) , the method includes retrofitting a winglet (112) to said blade (10) such that in use tip leakage is reduced.

2. The method of claim 1 wherein retrofitting said winglet (12) includes fixing a winglet (12) to one or each said faces (16,18) of said tip portion (14)

3. The method of claim 1 wherein retrofitting said winglet (12) includes:
a. removing said tip portion (14), and
b. bonding a replacement tip portion (25) in place of said removed tip portion (14) wherein said replacement tip portion (25) comprises said winglet (12)

4. The method of claim 3 wherein said winglet is formed as one piece with said replacement tip portion.

5. The method of claim 3 wherein said winglet (12) is fixed to said replacement tip.(25).

6. The method of any one of claims 1 to 5 wherein said blade (10) is a turbine blade having internal cooling and said winglet (12) is retrofitted such that said internal cooling flow is not disrupted.

7. The method of claim 6 wherein said internal cooling is not disrupted by fixing of said winglet (12) adjacent to said tip wall (22).

8. The method any one of claims of claim 2, 5 or 7 wherein said fixing includes the steps of:
a. machining one or more slots(20) through one or each said faces (16,18);
b. manufacture said winglet (12) such that said winglet (12) comprises one or more keys (30) on an inner edge face (32) such that said one or more keys (30) are receivable by one or more said slots (20) therein;
c. engaging said inner edge face (32) of said winglet (12) with said one or each face (16,18) by inserting said one or more said keys (30) in said one or more slots (20);
d. bonding said winglet (12) to said one or each faces (16,18).

9. A turbine or compressor blade comprising a tip portion (14) having a pressure face (16), and a suction face (18), said blade **characterised by** a winglet (12) retrofitted to said blade (10) such that in use blade tip leakage is reduced.

10. The blade of claim 9 wherein said winglet (12) is retrofitted by being fixed to said one or each faces (16,18).

11. The blade of claim 9 wherein said tip portion (14) is a replacement tip portion (25), said winglet (12) is retrofitted by being fixed to said one or each faces (16,18) of said replacement tip portion (25).

12. The blade of claim 9 wherein said tip portion (14) is a replacement tip portion (25), said winglet (12) is retrofitted by being formed as one piece with said replacement tip portion (25).

13. The blade of claim 10 or claim 11 wherein said blade is a cooled turbine blade with internal cooling and said winglet (12) is fixed to said one or each face (16,18) such that said internal cooling is not disrupted.

14. The blade of any one of the claims 10, 11 or 13 wherein said fixing comprises:
a. one or more slots through one or each said faces,
b. one or more keys on an inner edge of said winglet wherein said one or more keys are receivable by one or more said slots therein,
c. one or more keys received in said one or more said slots therein enabling engagement of said inner edge with said tip portion face,
d. bonding means bonding said winglet to said one or each face.

15. The winglet of any one of claims 2, 5, 7, 8, 10, 11, 13 or 14 wherein said winglet (12) is made of material different to that of said blade (10).
